# EUROPEAN PATENT APPLICATION

(11) **EP 2 306 287 A2**
(43) Date of publication of application: **06.04.2011**
(21) Application number: 09015219.0
(22) Date of filing: 08.12.2009
(51) Int. Cl.: G06F 3/048

(54) **Apparatus and method for displaying input character indicator**

(30) Priority: 30.09.2009 KR 20090092824
(71) Applicant: LG Electronics Inc., Seoul 150-721 (KR)
(72) Inventor: Jeon, Man Woo, Kumchon-gu Seoul, 153-801 (KR); Ryu, Seungkyoon, Kumchon-gu Seoul, 153-801 (KR)
(74) Representative: Katérle, Axel

(57) **Abstract**

The method for displaying an input character indicator includes generating a first indicator indicative of a first language of input characters when a mouse cursor enters a search field and displaying the first indicator as a separate window screen near the mouse cursor.

## Description

This application claims the benefit of Korea Patent Application No. 10-2009-0092824 filed on September-30, 2009, which is incorporated herein by reference for all purposes as if fully set forth herein.

### BACKGROUND OF THE INVENTION

### FIELD OF THE INVENTION

This document relates to an apparatus and method for displaying an input character indicator which are applied to various types of computers, such as a desktop computer, a laptop computer, etc.

In general, a keyboard for various computers, such as a desktop computer, a laptop computer, etc is provided with a specific key button for selecting the language of input characters.

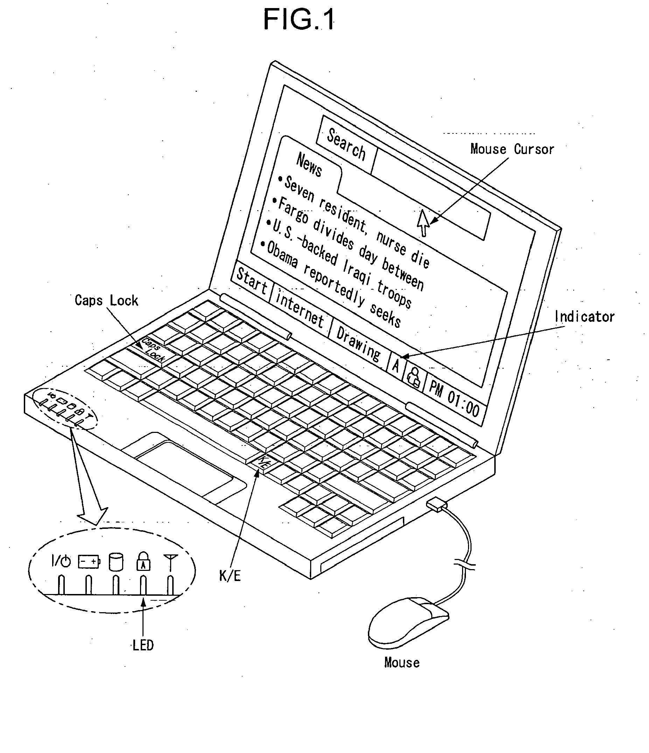

For example, as shown in FIG. 1, a keyboard of a laptop computer is provided with a 'K/E' key button for switching the language of input characters from Korean to English or from English to Korean. Also, in case of English, a 'Caps Lock' key button for selecting between capital letters and small letters.

The laptop computer has an LED for indicating that the language of input characters is English (or Korean) that is provided on the left bottom of the keyboard. Also, an indicator for indicating that the language of input characters is English (or Korean) is displayed on the right bottom of a display screen.

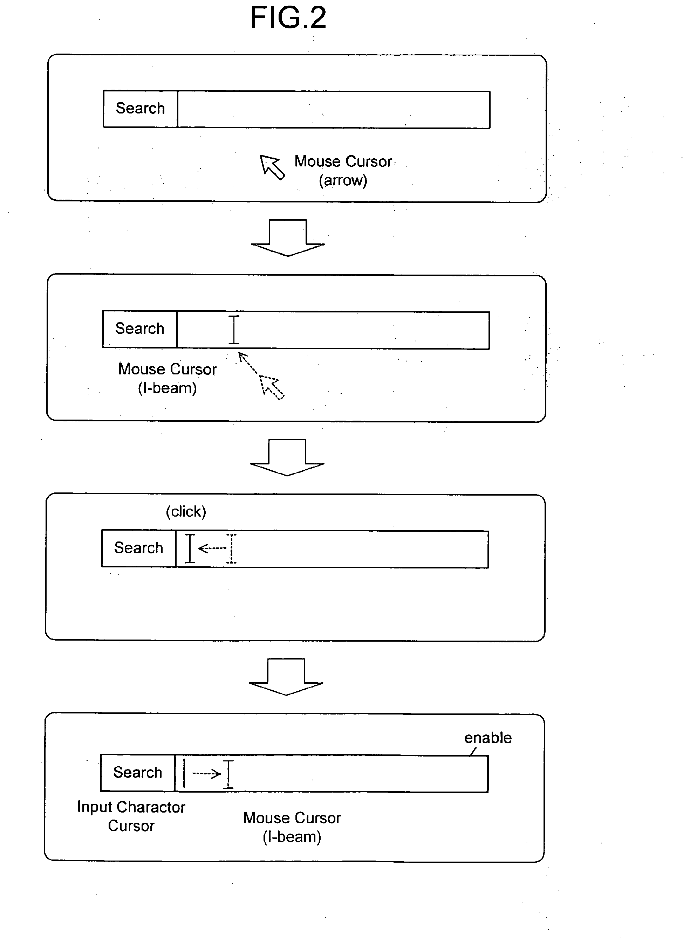

In the laptop computer, when a mouse cursor enters an area that allows text entry, for example, a search field as shown in FIG. 2, by a user's hand, the arrow mouse cursor changes to an I-beam shape.

Moreover, when the user clicks on the left key button of the mouse, with the I-beam mouse cursor being positioned in the search field, the search field is enabled and then an input character cursor is displayed within the search field, apart from the mouse cursor.

With the input character cursor being displayed within the search field, when the user enters character key buttons provided on the keyboard, Korean or English capital letters or English small letters are displayed in the search field.

As stated above with reference to FIG. 1, the user checks the LED provided on the left bottom of the keyboard or the indicator displayed on the right bottom of the display screen to determine whether the characters to be entered in the search field are Korean or English capital letters or English small letters, and then enters the character key buttons provided on the keyboard.

However, when the input character cursor is displayed within the search field, most computer users generally enter the character key buttons almost without looking at the keyboard. Therefore, it is often the case that a user wanting to type Korean gets to type English, or a user wanting to type English capital letters gets to type English small letters.

### SUMMARY OF THE INVENTION

An aspect of this document is to provide an apparatus and method for displaying an input character indicator, in which, if a mouse cursor displayed on a display screen of various computers, such as a desktop computer and a laptop computer, changes to an I-beam shape, an indicator indicative of the language of input characters is generated as a separate window screen and displayed in the vicinity of the I-beam mouse cursor.

To achieve these and other advantages and in accordance with the purpose of the present invention, as embodied and broadly described, the method for displaying an input character indicator includes generating a first indicator indicative of a first language of input characters when a mouse cursor enters a search field and displaying the first indicator as a separate window screen near the mouse cursor.

In another aspect, the apparatus for displaying an input character indicator includes a main processor to generate a first indicator indicative of a first language of input characters when a mouse cursor enters a search field and a display processor to display the first indicator as a separate window screen near the mouse cursor.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:

FIG. 1 is a configuration view of an example of a general laptop computer;

FIG. 2 shows an example in which a general mouse cursor changes to an I-beam shape;

FIG. 3 is a configuration view of an exemplary embodiment of a laptop computer to which the present invention is applied;

FIG. 4 is a flow chart of a method for displaying an input character indicator in accordance with an exemplary embodiment of the present invention;

FIG. 5 shows an exemplary embodiment in which the input character indicator of the present invention is displayed in the vicinity of an I-beam mouse cursor;

FIG. 6 shows various exemplary embodiments of the input character indicator in accordance with the present invention.

FIGS. 7 and 8 show exemplary embodiments of a user selection menu screen of the present invention.

FIGS. 9 to 11 show various exemplary embodiments in which the input character indicator of the present invention is moved and displayed by a mouse movement operation;

FIG. 12 shows another exemplary embodiment in which the input character indicator of the present invention is displayed in the vicinity of the I-beam mouse cursor;

FIG. 13 shows an exemplary embodiment in which the input character indicator of the present invention is displayed in the vicinity of the input character cursor;

FIG. 14 shows an exemplary embodiment in which the input character indicator of the present invention is moved from the vicinity of the input character indicator to the vicinity of the I-beam mouse cursor and displayed;

FIG. 15 shows exemplary embodiments in which a user selection menu screen of the present invention is displayed on a touch screen; and

FIG. 16 shows an exemplary embodiment in which the input character indicator of the present invention is sequentially changed.

### DETAILED DESCRIPTION OF THE PREFERRED EMBODIMENTS

The above-mentioned objectives, features, and advantages will be more apparent by the following detailed description associated with the accompanying drawings. In the following, exemplary embodiments of the present invention will be set forth in detail with reference to the accompanying drawings. Throughout the specification, like reference numerals denote like components. In the following description, well known functions or configurations are not described in detail so as not to obscure the invention in unnecessary detail.

An apparatus and method for displaying an input character indicator according to the present invention are applied to various types of computers, such as a desktop computer, a laptop computer, etc.

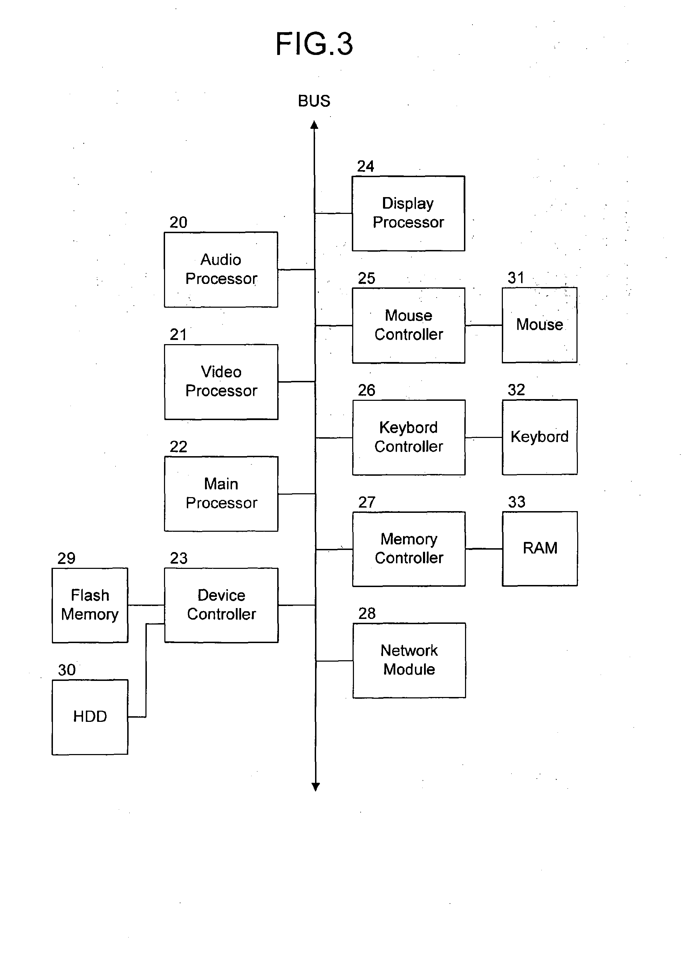

As shown in FIG. 3, a laptop computer to which the present invention is applied comprises, for example, an audio processor 20, a video processor 21, a main processor 22, a device controller 23, a display processor 24, a mouse controller 25, a keyboard controller 26, a memory controller 27, a network module 28, etc. The processors, the controllers, and the network module may be connected to one another via a bus line.

Moreover, a flash memory 29, which is a nonvolatile memory, and a hard disk 30 are connected to the device controller 23, a RAM 33, which is a volatile memory, is connected to the memory controller 27, and a mouse 31 and a keyboard 32 are connected to the mouse controller 25 and the keyboard controller 26, respectively.

An input character indicator display program according to the present invention is stored and managed in the flash memory 29 or the hard disk 30. For example, the input character indicator display program is read out by the device controller 23, and then copied to the RAM 33 by the memory controller 27.

The input character indicator display program copied to the RAM 33 is uploaded on the main processor 22, and then executed as one application program. For instance, when a mouse cursor displayed on a display screen changes to an I-beam shape, the main processor 22 generates the indicator indicating the language of input characters as a separate window screen.

The display processor 24 displays the indicator, which is generated as the separate window screen, in the vicinity of the I-beam mouse cursor so that the user can select and type desired characters more correctly. This will be described below in more detail.

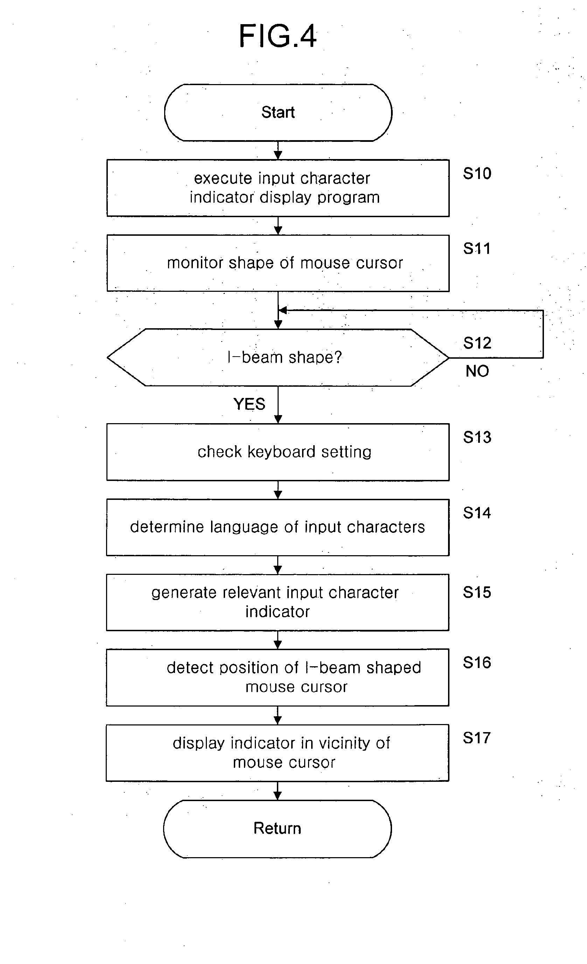

FIG. 4 is a flow chart of a method for displaying an input character indicator in accordance with an exemplary embodiment of the present invention. When the input character indicator display program stored and managed in the flash memory 29 or the hard disk 30 is copied to the RAM 33 via the device controller 23 and the memory controller 27, the main processor 22 uploads the input character indicator program copied to the RAM 33 and executes it as one application program (S10).

The main processor 22 monitors if the arrow mouse cursor changes to the I-beam shape through an interface with the mouse controller 25, the keyboard controller 26, and the display processor 24 (S11).

As a result of the monitoring, if the mouse cursor changes to the I-beam shape (S12), the main processor 22 checks the current keyboard setting through the interface with the keyboard controller 26 (S13), and then determines the language of input characters (S14).

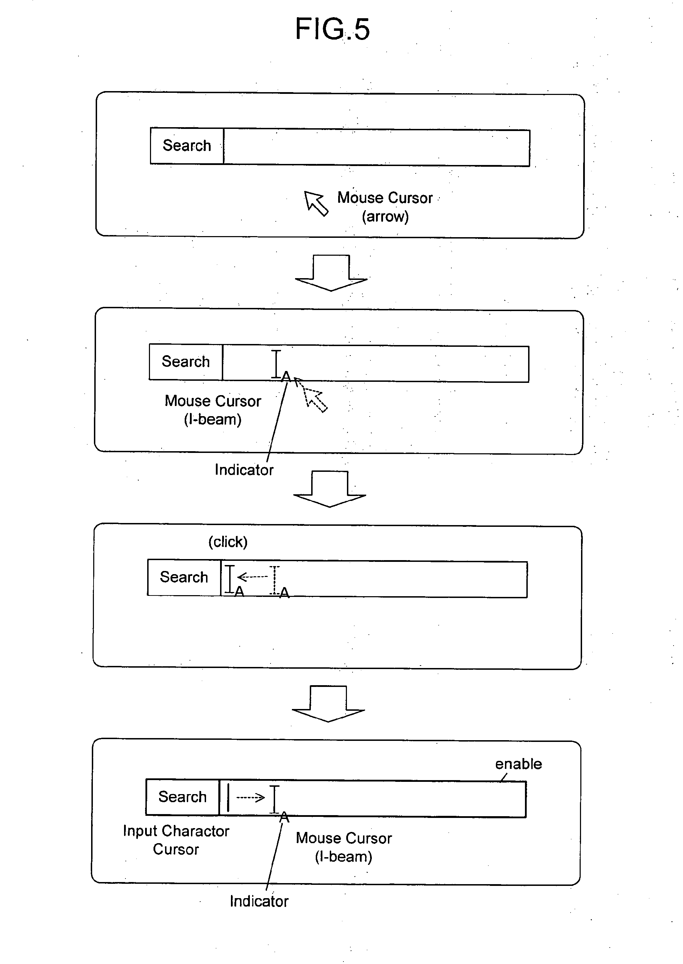

For example, as shown in FIG. 5, if the arrow mouse cursor enters the search field, with the search field being displayed on the display screen, the arrow mouse cursor changes to the I-beam shape. At this point, the main processor 22 checks the current keyboard setting.

If the checked keyboard setting is English & Capital, an indicator 'A' for indicating that the language of input characters is English & Capital is generated as a separate window screen, apart from the mouse cursor (S15).

Moreover, the position where the I-beam mouse cursor is displayed is detected (S16), and then the indicator generated in the separate window screen is displayed in the vicinity of the I-beam mouse cursor (S17).

For example, as shown in FIG. 5, the indicator can be displayed in various colors as a character in a small window screen on the right bottom of the I-beam mouse cursor or on the left bottom of the I-beam mouse cursor.

For example, as shown in FIG. 5, when the user clicks on the left button of the mouse, with the I-beam mouse cursor being positioned in the search field, the main processor 22 enables the search field and then displays an input character cursor within the search field, apart from the mouse cursor.

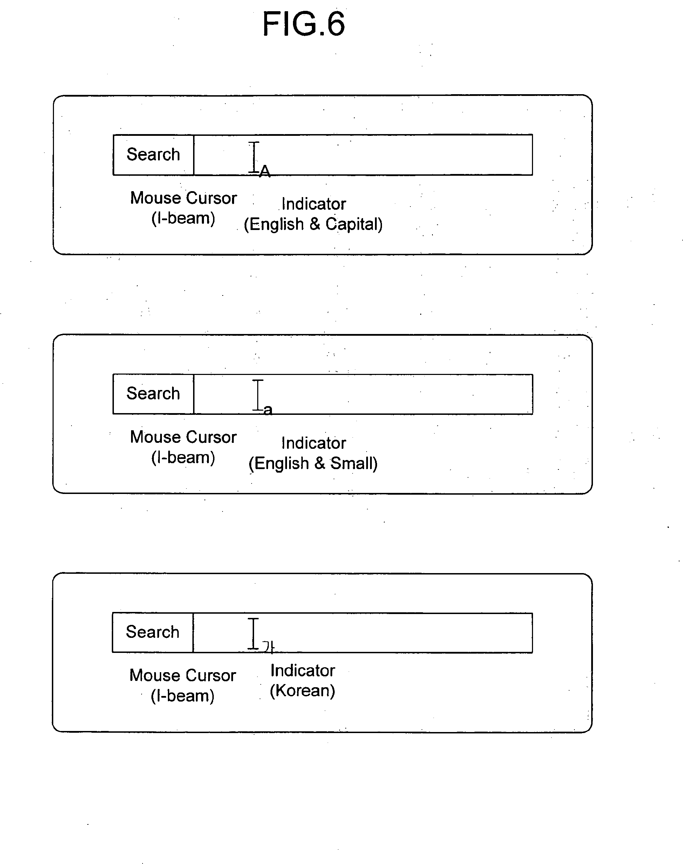

For example, as shown in FIG. 6, an indicator 'A' indicative of English & Capital, or an indicator 'a' indicative of English & Small, or an indicator 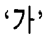 indicative of Korean are displayed in a separate window screen, apart from the mouse cursor, in the vicinity of the I-beam mouse cursor.

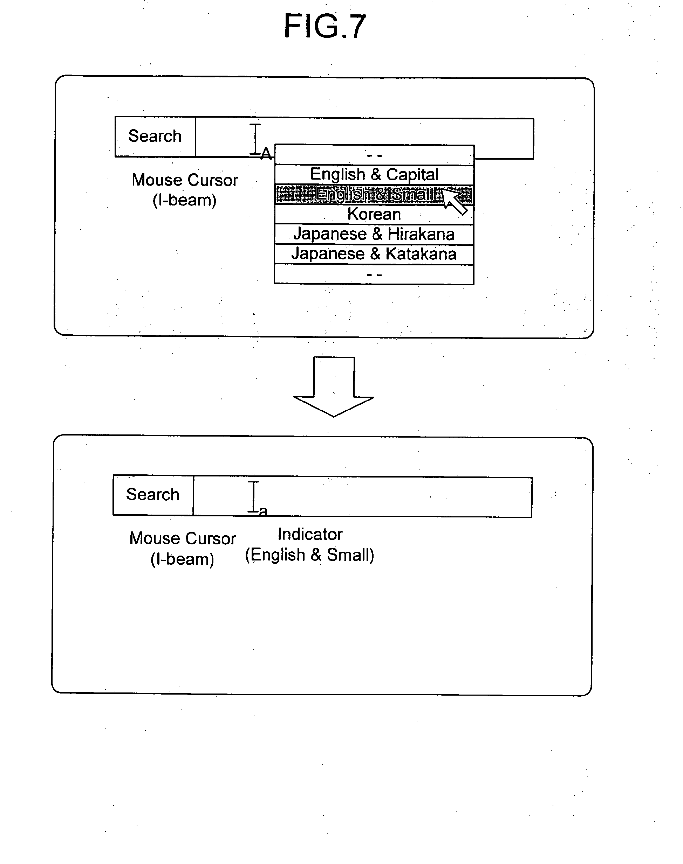

Moreover, when the user clicks on the right button of the mouse, with the indicator being displayed, a user selection menu screen is displayed, for example, as shown in FIG. 7, to select the menu items 'English & Capital', 'English & Small', 'Korean', 'Japanese & Hiragana', and 'Japanese & Katakana'.

When the user selects the menu item 'English & Small' through the user selection menu screen, the main processor 22 changes the indicator 'A' indicative of English & Capital to the indicator 'a' indicative of English & Small and displays it, and operatively controls the keyboard controller 26 to change the keyboard setting to English & Small.

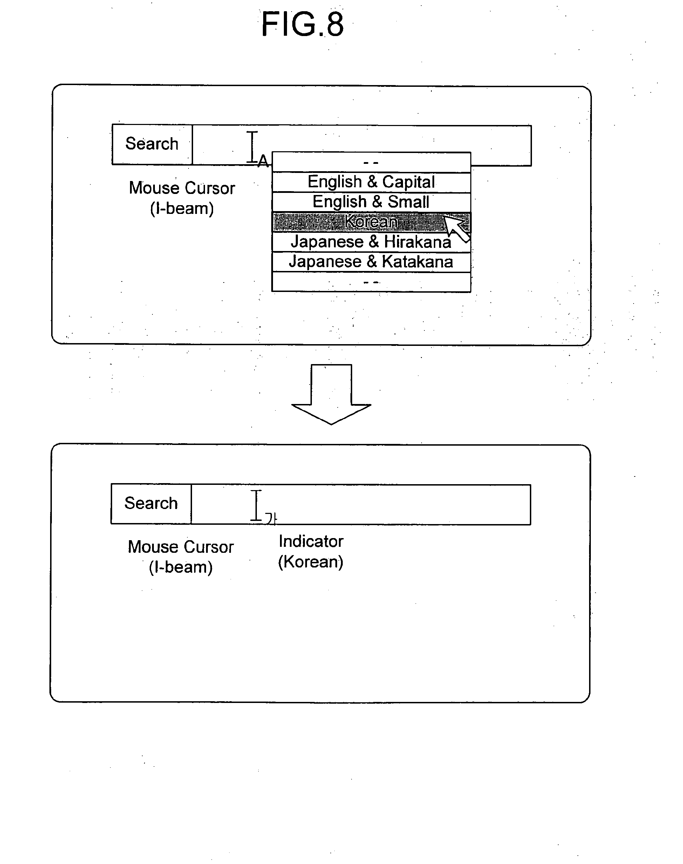

On the other hand, as shown in FIG. 8, when the user selects the menu item 'Korean' through the user selection menu screen, the main processor 22 changes the indicator 'A' indicative of English & Capital to the indicator 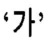 indicative of Korean and displays it, and operatively controls the keyboard controller 26 to change the keyboard setting to Korean.

Also, menu items for selecting various languages such as Russian, Chinese, etc, as well as Korean, English & Capital, English & Small, Japanese Hiragana, and Japanese Katakana, can be displayed on the user selection menu screen.

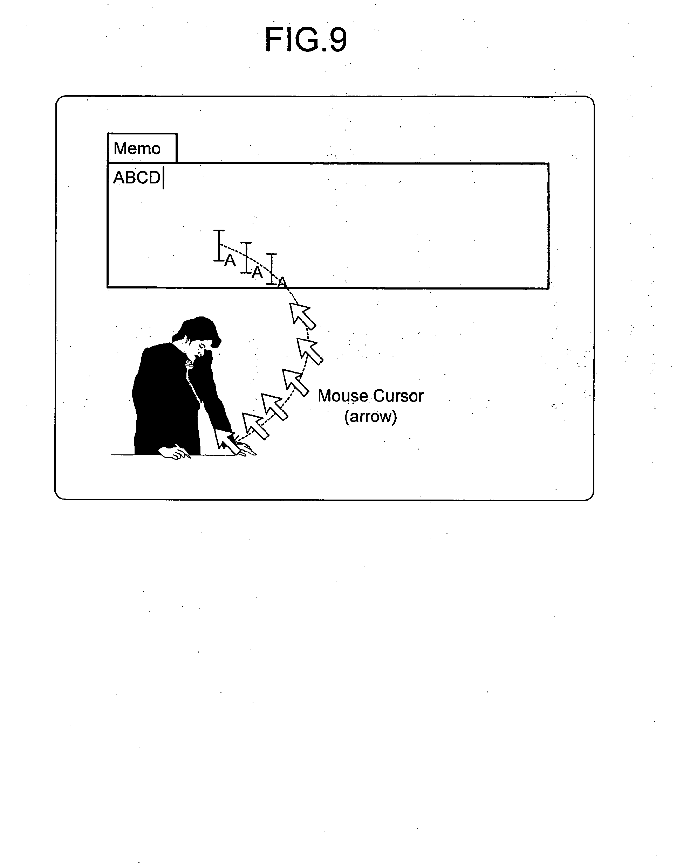

Moreover, for example, as shown in FIG. 9, in the case where the user moves the I-beam mouse cursor from a text entry area, such as Notepad, to a non-text entry area, such as a picture, the I-beam mouse cursor changes to an arrow shape the instant it gets out of the text entry area, and thus no indicator is displayed on the arrow mouse cursor.

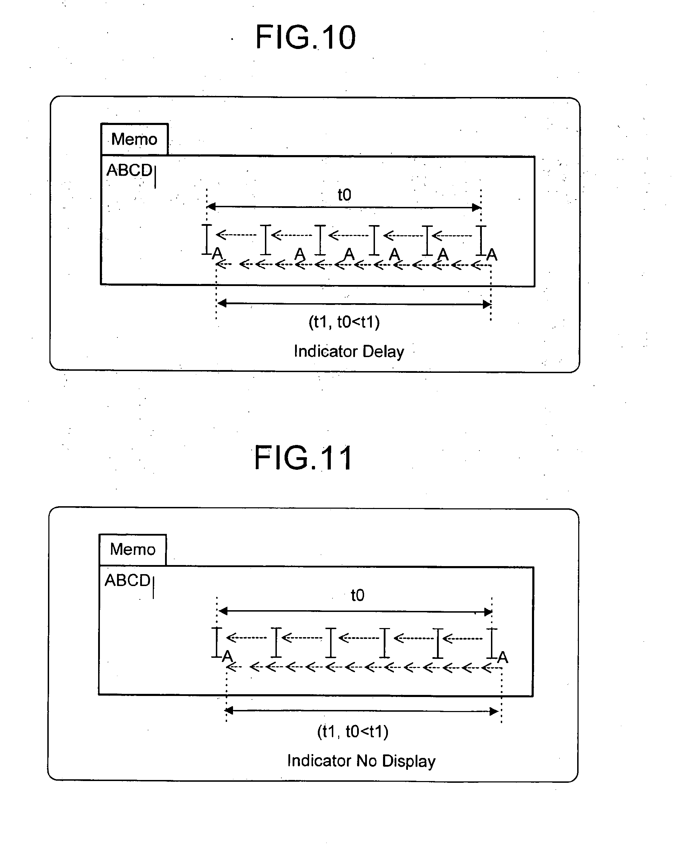

Furthermore, for example, as shown in FIG. 10, in the case of rapidly moving the I-beam mouse cursor displayed within the text entry area, such as Notepad, from the right to the left, an operation of detecting the position of the mouse cursor is necessary in order to display the indicator in the vicinity of the mouse cursor, thus making an indicator movement time t1 longer than a mouse cursor movement time t0.

Therefore, although the indicator gets farther and farther from the mouse cursor while the mouse cursor is moving, the indicator is displayed afterwards, as originally intended, in the vicinity of the mouse cursor when the mouse cursor is stopped.

In another exemplary embodiment, as shown in FIG. 11, the main processor 22 does not display the indicator while the mouse cursor is moving, and detects the position of the mouse cursor at a point of time when the mouse cursor is stopped afterwards, to thereby display the indicator as originally intended in the vicinity of the mouse cursor.

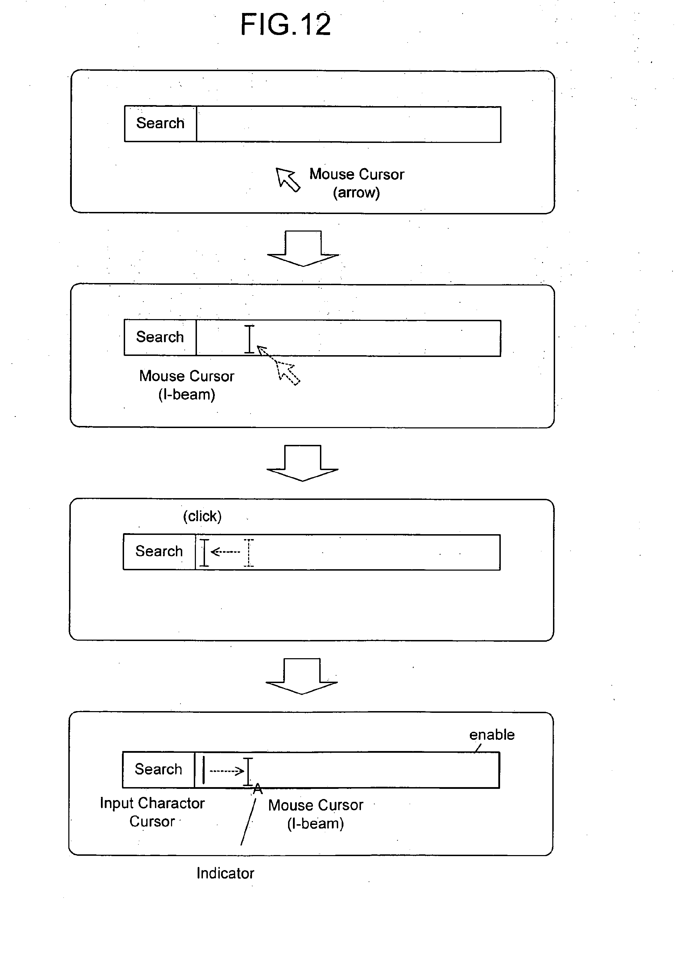

In still another exemplary embodiment, as shown in FIG. 12, in the case where the arrow mouse cursor enters the search field, the main processor 22 displays the I-beam mouse cursor but displays no indicator, and generates an indicator, at a point of time when the search field is enabled and displays an input character cursor, in the vicinity (e.g., bottom) of the input character cursor but displays no indicator in the vicinity of the mouse cursor.

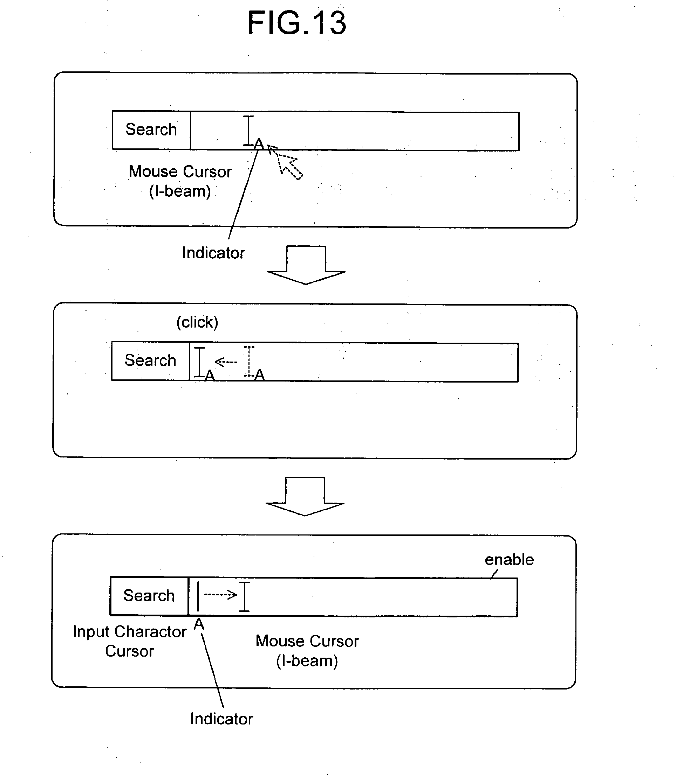

In yet another exemplary embodiment, as shown in FIG. 13, if the search field is enabled and displays an input character cursor, with an indicator being displayed in the vicinity of the I-beam mouse cursor, the main processor 22 displays the indicator displayed in the vicinity of the mouse cursor not in the vicinity of the mouse cursor but in the vicinity (e.g. bottom) of the input character cursor.

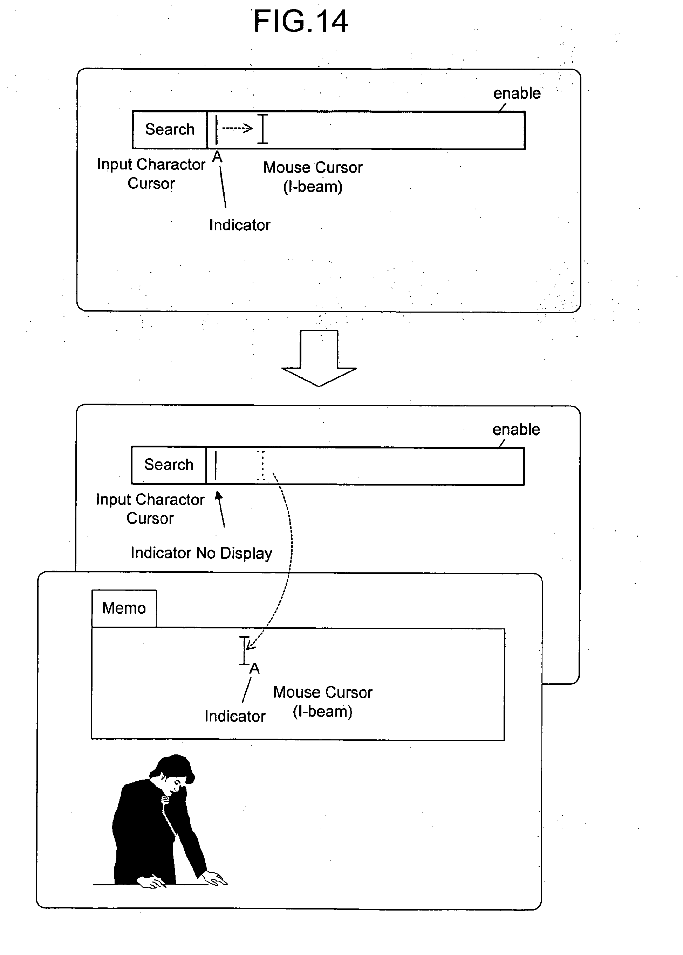

Moreover, as shown in FIG. 14, if the I-beam mouse cursor is moved to other text entry area, such as Notepad in the Windows screen, with the indicator being displayed in the vicinity of the input character cursor, the indicator is not displayed in the vicinity of the input character cursor but the indicator is displayed as originally intended in the vicinity of the I-beam mouse cursor.

On the other hand, if the user touches the indicator with a hand, with the I-beam mouse cursor and the indicator being displayed on the touch screen, the main processor 22 displays the user selection menu screen for selecting and changing the language of input characters or sequentially changes the language of input characters according to a preset order.

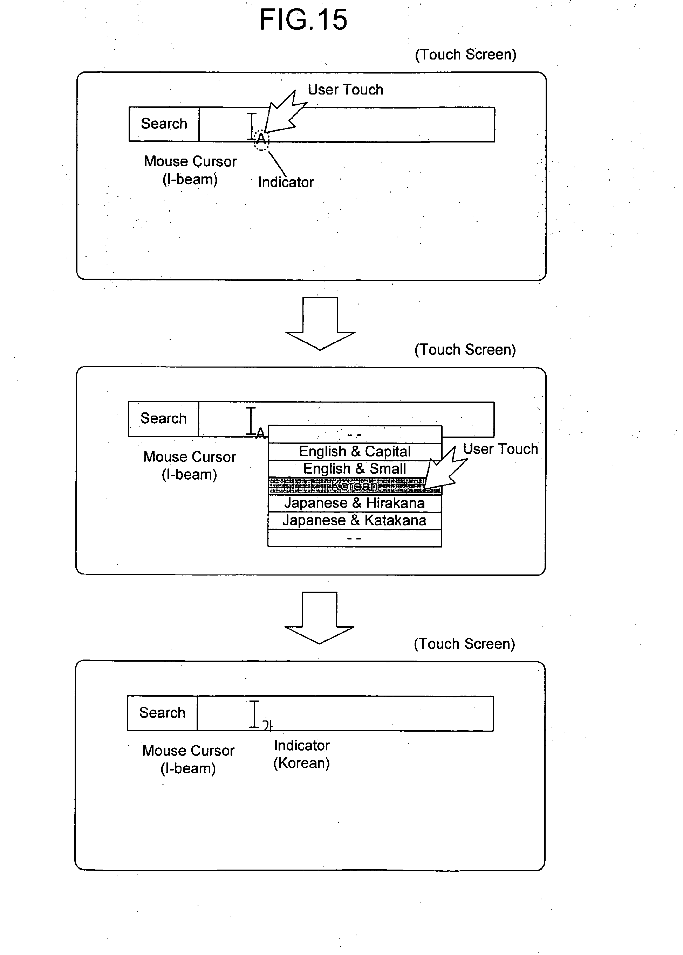

For example, as shown in FIG. 15, if the user touches the indicator corresponding to English & Capital with a hand, the user selection menu screen for selecting and changing the language of input characters is displayed, and thereafter, if the user touches the menu item 'Korean' with a hand, the indicator changes from English & Capital to Korean.

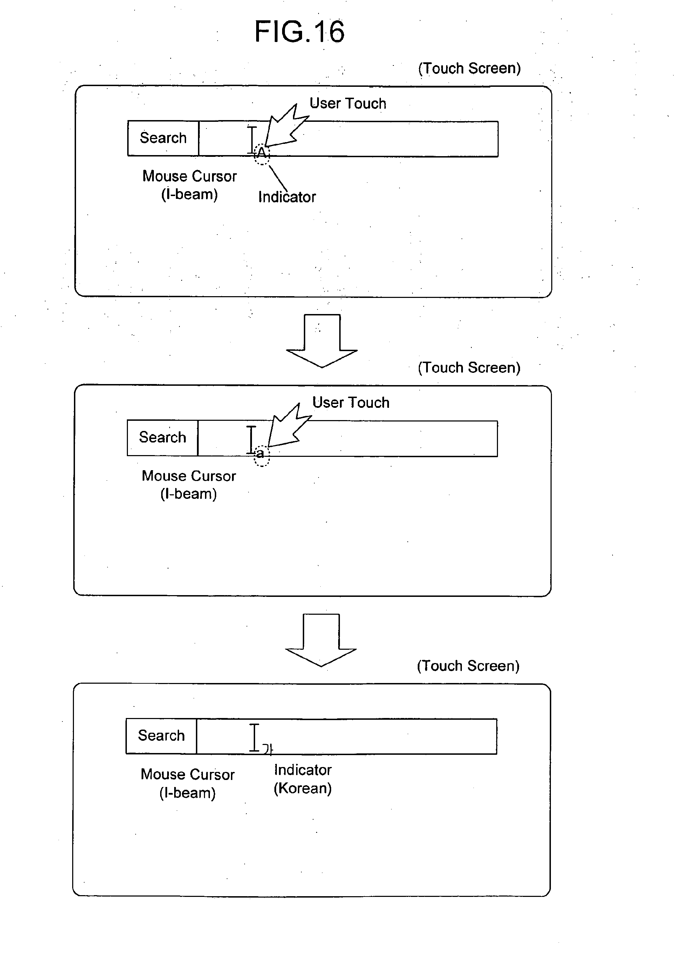

Moreover, in another exemplary embodiment, as shown in FIG. 16, if the user touches the indicator corresponding to English & Capital with a hand, the indicator changes from English & Capital to English & Small according to a preset order, and thereafter if the user touches the indicator corresponding to English & Small with a hand, the indicator changes from English & Small to Korean.

Accordingly, as described above, the user can select and type characters of a desired language more correctly by checking the indicator displayed in various ways in a separate window screen in the vicinity of the I-beam mouse cursor.

For reference, the present invention applies equally to other various application programs that allow text entry, such as a word processor, as well as a text entry search field and Notepad.

It should be understood that the scope of the present invention is not limited by the foregoing embodiments and the accompanying drawings, but is defined by the claims that follow. Accordingly, those skilled in the art will appreciate that various substitutions, modifications and changes are possible, without departing from the technical spirit of the present invention.

## Claims

1. A method for displaying an input character indicator, comprising:
generating a first indicator indicative of a first language of input characters when a mouse cursor enters a search field; and
displaying the first indicator as a separate window screen near the mouse cursor.

2. The method of claim 1, further comprising displaying a user selection menu screen for changing the first language into a second language of input characters when a first button of the mouse is clicked while the first indicator is being displayed, wherein the second language can be selected by a user.

3. The method of claim 2, further comprising, upon selecting the second language of input characters through the user selection menu screen, changing a keyboard setting and displaying a second indicator in accordance with the selected second language.

4. The method of claim 1, further comprising displaying a user selection menu screen for changing the first language into a second language of input characters when the screen is touched while the first indicator is being displayed.

5. The method of claim 1, further comprising the first indicator indicative of the first language into a second indicator indicative of a second language of input characters when the screen is touched while the first indicator is being displayed, wherein the second language is predetermined.

6. The method of claim 1, further comprising displaying the first indicator near an input character cursor when a second button of the mouse is clicked while the first indicator is being displayed.

7. A method for displaying an input character indicator, comprising:
generating a first indicator indicative of a first language of input characters when a mouse cursor enters a search field and a button of the mouse is clicked; and
displaying the first indicator as a separate window screen near the mouse cursor.

8. An apparatus for displaying an input character indicator, comprising
a main processor to generate a first indicator indicative of a first language of input characters when a mouse cursor enters a search field; and
a display processor to display the first indicator as a separate window screen near the mouse cursor.

9. The apparatus of claim 8, wherein a user selection menu screen is displayed for changing the first language into a second language of input characters when a first button of the mouse is clicked while the first indicator is being displayed, wherein the second language can be selected by a user.

10. The apparatus of claim 9, wherein the main processor changes a keyboard setting and the display processor displays a second indicator in accordance with the selected second language upon selecting the second language of input characters through the user selection menu screen.

11. The apparatus of claim 8, wherein a user selection menu screen is displayed for changing the first language into a second language of input characters when the screen is touched while the first indicator is being displayed, wherein the second language can be selected by a user.

12. The apparatus of claim 8, wherein the main processor changes a keyboard setting and the display processor displays a second indicator in accordance with a selected second language when the screen is touched while the first indicator is being displayed, wherein the second language is predetermined.

13. The apparatus of claim 8, wherein the display processor displays the first indicator near an input character cursor when a second button of the mouse is clicked while the first indicator is being displayed.

14. An apparatus for displaying an input character indicator, comprising
a main processor to generate a first indicator indicative of a first language of input characters when a mouse cursor enters a search field and a button of the mouse is clicked; and
a display processor to display the first indicator as a separate window screen near the mouse cursor.
